# EUROPEAN PATENT APPLICATION

(11) **EP 2 341 606 A1**
(43) Date of publication of application: **06.07.2011**
(21) Application number: 10251869.3
(22) Date of filing: 29.10.2010
(51) Int. Cl.: H02M 7/48

(54) **Grid interconnection inverter and grid interconnection device**

(30) Priority: 30.10.2009 JP 2009251197
(71) Applicant: Sanyo Electric Co., Ltd., Osaka 570-8677 (JP)
(72) Inventor: Yoneda, Fumiiki, Moriguchi City Osaka 570-8677 (JP)
(74) Representative: Calderbank, Thomas Roger

(57) **Abstract**

A grid interconnection inverter includes: a voltage conversion circuit configured to output an intermediate voltage by raising or lowering an input voltage from a direct current power source; and a waveform conversion circuit configured to convert the intermediate voltage into a alternating current power in a sine waveform shape. The voltage conversion circuit includes: a positive-side circuit arranged on a positive-side line between a positive polarity of the direct current power source and the waveform conversion circuit; and a negative-side circuit arranged on a negative-side line between a negative polarity of the direct current power source and the waveform conversion circuit. The positive-side circuit and the negative-side circuit have circuit configurations symmetric to each other.

## Description

This application is based upon and claims the benefit of priority from prior Japanese Patent Application No.2009-251197, filed on October 30, 2009; the entire contents of which are incorporated herein by reference.

The present invention relates to a grid interconnection inverter that converts direct current power from a direct current power source into alternating current power of a commercial frequency to thereby interconnect the alternating current power to a power system, and relates also to a grid interconnection device.

Conventionally, there is widely used a grid interconnection inverter that converts direct current power from a direct current power source such as a solar cell into alternating current power of a commercial frequency to thereby interconnect the alternating current power to a power system.

In recent years, in order to achieve a small, highly efficient grid interconnection inverter, a grid interconnection inverter of a circuit system without an isolation transformer (a so-called transformerless system) has gained attention.

The grid interconnection inverter of a transfomerless system includes: a voltage conversion circuit that generates an intermediate voltage by constantly raising an input voltage to voltage above a grid voltage by way of high-frequency switching; and a waveform conversion circuit that converts the intermediate voltage into alternating current power by way of high-frequency switching. The grid interconnection inverter outputs the alternating current power to a power system.

Moreover, there is proposed a grid interconnection inverter in which as a result of the voltage conversion circuit shaping at least one portion of a sine waveform so as to enable omission of one portion of the high-frequency switching, resulting in a decrease of switching loss caused along with the high-frequency switching (see Japanese Patent Application Publication No. 2004-104963 (hereinafter, Patent Document 1) and Japanese Patent Application Publication No. 2000-152661 (hereinafter, Patent Document 2)).

However, in the grid interconnection inverters described in Patent Documents 1 and 2, when the voltage conversion circuit shapes at least one portion of the sine waveform, respective ground voltages in a positive-side line and a negative-side line between the direct current power source and the voltage conversion circuit vary.

In this case, between the direct current power source such as a solar cell and the ground, an earth capacity exists. The grid interconnection inverter of a transformerless system has a problem in that because input/output is not electrically insulated and separated, when the respective ground voltages in the positive-side line and the negative-side line vary, a leak current passes via the earth capacity

Therefore, the grid interconnection inverters described in Patent Documents 1 and 2 have a problem in that the reliability in safety and maintenance is not sufficient and measures against noise such as EMI noise need to be taken.

In an aspect, a grid interconnection inverter (grid interconnection inverter 100A or 100B) includes: a voltage conversion circuit (buck-boost converter 2A or boost converter 2B) configured to output an intermediate voltage (intermediate voltage Vd) by raising or lowering an input voltage (input voltage Vi) from a direct current power source (direct current power source 1); and a waveform conversion circuit (full bridge inverter 3A or 3B) configured to convert the intermediate voltage into a alternating current power in a sine waveform shape. The voltage conversion circuit shapes at least one portion of a sine waveform corresponding to the alternating current power. The voltage conversion circuit includes: a positive-side circuit (positive-side circuit 210A or 210B) arranged on a positive-side line (positive-side line Lp) between a positive polarity of the direct current power source and the waveform conversion circuit; and a negative-side circuit (negative-side circuit 220A or 220B) arranged on a negative-side line (negative-side line Ln) between a negative polarity of the direct current power source and the waveform conversion circuit. The positive-side circuit and the negative-side circuit have circuit configurations symmetric to each other.

According to above aspect, the voltage conversion circuit that shapes at least one portion of the sine waveform corresponding to the alternating current power includes a positive-side circuit and a negative-side circuit of which the circuit configurations are symmetric to each other. Due to the presence of the positive-side circuit and the negative-side circuit of which the circuit configurations are symmetric to each other, the ground voltage variances are canceled out to each other between the positive side and the negative side, and as a result, the respective ground voltages in the positive-side line and the negative-side line between the direct current power source and the voltage conversion circuit can be kept constant. This enables inhibition of the leakage current passing via the earth capacity, and therefore, it is possible to improve the reliability in safety and maintenance and also to simplify measures against EMI noise, etc.

In the grid interconnection inverter, the positive-side circuit includes a plurality of positive-side circuit elements different in type are connected in series on the positive-side line. The negative-side circuit includes a plurality of negative-side circuit elements different in type are connected in series on the negative-side line. The positive-side circuit element connected at an n-th position as counted from the direct current power source side and the negative-side circuit element connected at an n-th position as counted from the direct current power source side are of the same type. The positive-side circuit element and the negative-side circuit element of the same type are configured of a circuit element having the same property

According to above aspect, when the positive-side circuit and the negative-side circuit are configured by using a circuit element of the same type and same property, balances of respective circuit properties in the positive-side circuit and the negative-side circuit can be made equal. As a result, the respective ground voltages in the positive-side line and the negative-side line between the direct current power source and the voltage conversion circuit can be further stabilized.

In the grid interconnection inverter, the positive-side circuit includes: a first switching element (switching element 21a); a first reactor (reactor 24a) connected downstream of the first switching element; and a first diode (diode 27a) connected downstream of the first reactor. The negative-side circuit includes: a second switching element (switching element 21b); a second reactor (reactor 24b) connected downstream of the second switching element; and a second diode (diode 27b) connected downstream of the second reactor. It is noted that "downstream" means a power system side and the "upstream" means a direct current power source side.

According to the grid interconnection inverter, it is possible to achieve a circuit configuration in which the positive-side circuit and the negative-side circuit are symmetric to each other in a circuit configuration in which the voltage conversion circuit shapes the entire sine waveform corresponding to the alternating current power. As a result, it becomes possible to inhibit a leakage current passing via an earth capacity.

The grid interconnection inverter includes a control unit (control unit 120A) configured to control an operation of the voltage conversion circuit. The control unit operates the first switching element and the second switching element in synchronization with each other.

According to the grid interconnection inverter, the positive-side circuit and the negative-side circuit are configured to have circuit configurations symmetric to each other, and in this state, respective switching elements in the positive-side circuit and the negative-side circuit are synchronized and operated. As a result, the respective operations of the positive-side circuit and the negative-side circuit can be made equal, enabling a further stability of the respective ground voltages in the positive-side line and the negative-side line between the direct current power source and the voltage conversion circuit.

The positive-side circuit includes: a first reactor (reactor 24a); and a first diode (diode 27a) connected downstream of the first reactor. The negative-side circuit includes: a second reactor (reactor 24b); and a second diode (diode 27b) connected downstream of the second reactor.

According to the grid interconnection inverter, it is possible to achieve a circuit configuration in which the positive-side circuit and the negative-side circuit are symmetric to each other in a circuit configuration in which the voltage conversion circuit shapes one portion of the sine waveforms corresponding to the alternating current power. As a result, it becomes possible to inhibit the leakage current passing via the earth capacity, as described above.

In an aspect, a grid interconnection device of an aspect includes: a direct current power source (direct current power source 1); and the grid interconnection inverter of the above aspect.

According to above aspect, it is possible to configure a grid interconnection device by using a grid interconnection inverter capable of inhibiting a leakage current passing via an earth capacity, and as a result, it becomes possible to improve the reliability in safety and maintenance and also to provide a grid interconnection device capable of simplifying measures against EMI noise, etc.

In the drawings:
Fig. 1 is a diagram showing a configuration of a grid interconnection device including a grid interconnection inverter according to a first embodiment;
Figs. 2A to 2H are waveform charts for explaining an operation of the grid interconnection inverter according to the first embodiment;
Fig. 3 is a diagram showing a configuration of a grid interconnection device including a grid interconnection inverter according to a second embodiment;
Figs. 4A to 4H are waveform charts for explaining an operation of the grid interconnection inverter according to the second embodiment;
Fig. 5 is a diagram for explaining a comparative embodiment of the fist embodiment; and
Fig. 6 is a diagram for explaining a comparative embodiment of the second embodiment.

Subsequently, a first embodiment, a second embodiment, and comparative embodiments of the first and second embodiments will be explained with reference to drawings. In the description of the drawings in the following embodiments, the same or similar constituent elements are designated by the same or similar reference numerals.

### [First Embodiment]

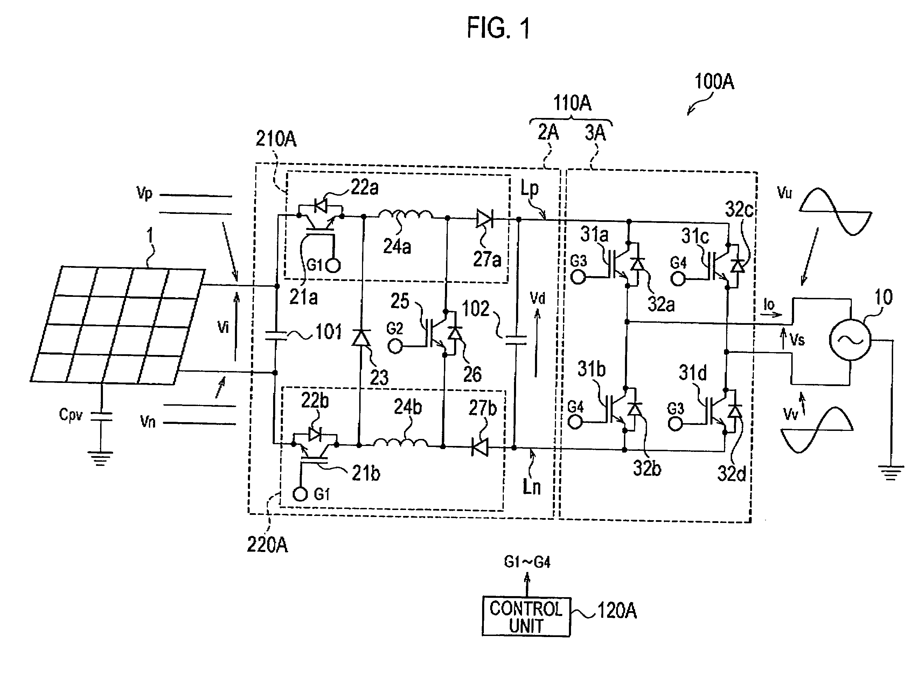

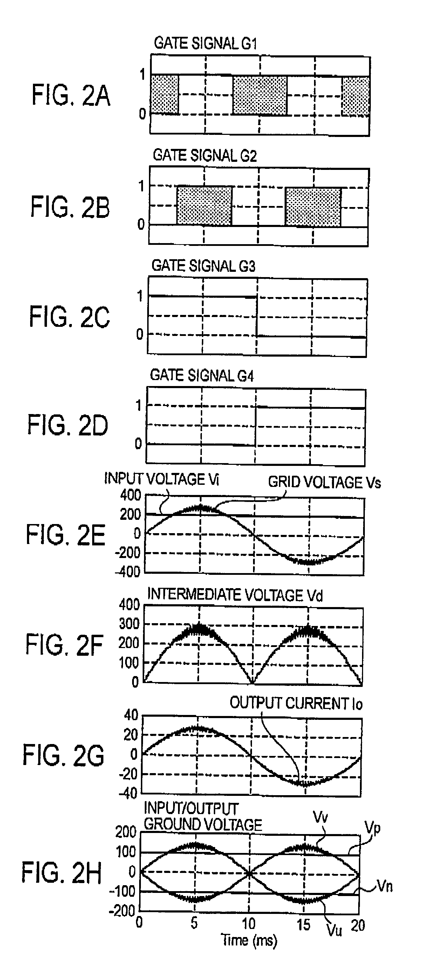

Firstly, with reference to Fig. 1 and Figs. 2Ato 2H, the first embodiment of the present invention will be explained.

Fig. 1 is a diagram showing a configuration of a grid interconnection device including a grid interconnection inverter 100A according to the first embodiment. Figs. 2A to 2H are waveform charts for explaining an operation of the grid interconnection inverter 100A.

As shown in Fig. 1, the grid interconnection device includes: a direct current power source 1; the grid interconnection inverter 100A; and a power system 10. The direct current power source 1 is of dispersion type (in which direct current power is output by power generation). Hereinafter, as the direct current power source 1, a solar cell is illustrated as an example. The direct current power source 1 has an earth capacity Cpv.

The grid interconnection inverter 100A converts the direct current power from the direct current power source 1 into alternating current power of a commercial frequency (for example, 50 or 60 Hz). Between the grid interconnection inverter 100A and the power system 10, a load (not shown) installed at a consumer is connected. The grid interconnection inverter 100A performs an interconnected operation in which the alternating current power is supplied to the load from both the grid interconnection inverter 100A and the power system 10.

The grid interconnection inverter 100A includes a main circuit 110A and a control unit 120A controlling the main circuit 110A. The main circuit 110A includes: a buck-boost converter 2A that outputs intermediate voltage Vd by raising or lowering input voltage Vi from the direct current power source 1; and a full bridge inverter 3A that converts the intermediate voltage Vd into alternating current power in a sine waveform shape. In the first embodiment, the buck-boost converter 2A configures a voltage conversion circuit. In the first embodiment, the full bridge inverter 3A configures a waveform conversion circuit.

The buck-boost converter 2A according to the first embodiment shapes the entire sine waveform corresponding to the alternating current power (grid voltage Vs). Herein, the intermediate voltage Vd output from the buck-boost converter 2A is a half-sine wave (see Fig. 2F). The full bridge inverter 3A switches polarities of the intermediate voltage Vd, and outputs the alternating current power in a sine waveform shape.

The buck-boost converter 2A includes: an input-stage capacitor 101; a positive-side circuit 210A; a negative-side circuit 220A; a diode 23; a switching element 25; a diode 26; and an interstage capacitor 102. The first embodiment illustrates an insulation gate bipolar transistor (IGBT) as the switching element 25; however, a power MOSFET, etc., may also be illustrated.

Downstream of the direct current power source 1, one end of the input-stage capacitor 101 is connected to a positive-side line Lp between a positive polarity of the direct current power source 1 and the full bridge inverter 3A, and the other end thereof is connected to a negative-side line Ln between a negative polarity of the direct current power source 1 and the full bridge inverter 3A. The input-stage capacitor 101 smoothens the direct current power from the direct current power source 1. It is noted that "downstream" means a power system side and the "upstream" means a direct current power source side.

One end of the positive-side line Lp is connected to a positive polarity side of the direct current power source 1, and the other end thereof is connected to one input side (input on the positive side) of the full bridge inverter 3A. One end of the negative-side line Ln is connected to a negative polarity side of the direct current power source 1, and the other end thereof is connected to the other input side (input on the negative side) of the full bridge inverter 3A.

The positive-side circuit 210A is arranged on the positive-side line Lp. The negative-side circuit 220A is arranged on the negative-side line Ln. The positive-side circuit 210A and the negative-side circuit 220A have circuit configurations symmetric to each other. Specifically, the positive-side circuit 210A is so configured that on the positive-side line Lp, a plurality of circuit elements different in type are connected in series. The negative-side circuit 220A is so configured that on the negative-side line Ln, a plurality of circuit elements different in type are connected in series. A positive-side circuit element connected at an n-th position as counted from the direct current power source 1 side and a negative-side circuit element connected at an n-th position as counted from the direct current power source 1 side (n: integer of 1 or more) are of the same type. It is noted that the symmetric circuit configuration means symmetry on a circuit diagram, and thus, positions at which the positive-side circuit 210A and the negative-side circuit 220A are actually disposed on the substrate need not be symmetric.

The positive-side circuit 210Aincludes: a switching element 21a (first switching element); a reactor 24a (first reactor) connected downstream of the switching element 21a; and a diode 27a (first diode) connected downstream of the reactor 24a.

One end (collector) of the switching element 21a is connected to the direct current power source 1 and the input-stage capacitor 101, and the other end (emitter) thereof is connected to the reactor 24a. The diode 22a is connected to the switching element 21a in an anti-parallel manner. The switching element 21a performs high-frequency switching in response to a gate signal G1 from the control unit 120A. One end (anode) of the diode 27a is connected to the reactor 24a, and the other end (cathode) thereof is connected to the full bridge inverter 3A.

The negative-side circuit 220A includes: a switching element 21b (second switching element); a reactor 24b (second reactor) connected downstream of the switching element 21b; and a diode 27b (second diode) connected downstream of the reactor 24b.

One end (emitter) of the switching element 21b is connected to the direct current power source 1 and the input-stage capacitor 101, and the other end (collector) thereof is connected to the reactor 24b. The diode 22b is connected to the switching element 21b in an anti-parallel manner. The switching element 21b performs high-frequency switching in response to the gate signal G1 from the control unit 120A. That is, the switching element 21b is controlled by the gate signal G1 that is shared by the switching element 21a. One end (cathode) of the diode 27b is connected to the reactor 24b, and the other end (anode) thereof is connected to the full bridge inverter 3A.

In this embodiment, a positive-side circuit element connected at an n-th position as counted from the direct current power source 1 side and a negative-side circuit element connected at an n-th position as counted from the direct current power source 1 side are of the same type. Besides, the both elements are configured by using a circuit element having the same circuit property.

For example, the switching element 21a and the switching element 21b connected at the first position as counted from the direct current power source 1 side are equal in circuit property (ON voltage, switching speed, etc.). The reactor 24a and the reactor 24b connected at the second position as counted from the direct current power source 1 side are equal in circuit property (inductance, etc.). The diode 27a and the diode 27b connected at the third position as counted from the direct current power source 1 side are equal in circuit properties (ON voltage, switching speed, etc.).

In order to reduce in size, the reactors 24a and 24b may be configured by a method in which a core is shared and windings respectively corresponding to the reactors 24a and 24b are wound around the common core.

The diode 23 is connected downstream of the switching elements 21a and 21b. One end (cathode) of the diode 23 is connected to a positive-side line Lp between the switching element 21a and the reactor 24a, and the other end (cathode) thereof is connected to a negative-side line Ln between the switching element 21b and the reactor 24b.

The switching element 25 is connected downstream of the reactors 24a and 24b. One end (collector) of the switching element 25 is connected to a positive-side line Lp between the reactor 24a and the diode 27a, and the other end (emitter) thereof is connected to a negative-side line Ln between the reactor 24b and the diode 27b. The diode 26 is connected to the switching element 25 in an anti-parallel manner. The switching element 25 performs high-frequency switching in response to a gate signal G2 from the control unit 120A.

The switching element 21a, the diode 22a, the diode 23, and the reactor 24a are used for outputting the intermediate voltage Vd by lowering the input voltage Vi. The diode 23 and the reactor 24a smoothen the output in which the voltage and the current are intermittent due to the switching of the switching element 21a.

Fig. 2A shows a waveform of the gate signal G1 input to the switching elements 21a and 21b from the control unit 120A. It is noted that in Figs. 2A to 2H, a hatched zone means a zone of the high-frequency switching.

The switching element 21a controls the amplitude of a current waveform passing through the reactor 24a by lowering the input voltage Vi by the high-frequency switching and modulating an on time by the gate signal G1. On the other hand, the switching element 21b controls the amplitude of a current waveform passing through the reactor 24b by way of the high-frequency switching synchronized with the switching element 21a.

The reactor 24a, the switching element 25, the diode 26, and the diode 27a are used to output the intermediate voltage Vd by raising the input voltage Vi. The reactor 24a accumulates boost energy.

Fig. 2B shows a waveform of the gate signal G2 input to the switching element 25 from the control unit 120A. The switching element 25 controls the amplitude of a current waveform passing through the reactors 24a and 24b by raising the input voltage Vi by the high-frequency switching and modulating an on time by the gate signal G2.

The switching elements 21a and 21b, and the switching element 25 perform high-frequency switching exclusively. Specifically, when the switching elements 21a and 21b perform high-frequency switching, the switching element 25 is in an off state, and when the switching element 25 performs high-frequency switching, the switching elements 21a and 21b are in an on state.

In a period during which the input voltage Vi is greater than an absolute value of the grid voltage Vs, the control unit 120A instantaneously controls the amplitude of the current waveform of the reactors 24a and 24b by carrying out a buck operation by performing high-frequency switching on the switching elements 21a and 21b and modulating the on time. At this time, the switching element 25 is turned off. In a period during which the input voltage Vi is smaller than the absolute value of the grid voltage Vs, the control unit 120A instantaneously controls the amplitude of the current waveform of the reactors 24a and 24b by raising the input voltage Vi by turning on the switching elements 21a and 21b and performing the high-frequency switching on the switching element 25 and modulating the on time.

Fig. 2F shows the waveform of the intermediate voltage Vd. As shown in Fig. 2F, a high frequency component corresponding to an operation frequency of the switching elements 21a and 21b and the switching element 25 is superposed onto the intermediate voltage Vd output from the buck-boost converter 2A.

The interstage capacitor 102 is connected downstream of the diodes 27a and 27b. The interstage capacitor 102 is used for removing the high frequency component included in the intermediate voltage Vd. One end of the interstage capacitor 102 is connected to a positive-side line Lp between the diode 27a and the full bridge inverter 3A, and the other end thereof is connected to a negative-side line Ln between the diode 27a and the full bridge inverter 3A. For example, a capacity of the interstage capacitor 102 is about several tens of µF.

The full bridge inverter 3A switches polarities of the intermediate voltage Vd, and also converts it into a sine wave AC synchronized with the power system 10. The full bridge inverter 3A includes full-bridge connected switching elements 31a to 31d. The first embodiment illustrates the IGBT as the switching elements 31a to 31d; however, a power MOSFET, etc., may also be illustrated.

The diodes 32a to 32d are connected to the switching elements 31a to 31d in an anti-parallel manner, respectively. The switching elements 31a and 31d performs switching in response to a gate signal G3 from the control unit 120A. The switching elements 31b and 31c perform switching in response to a gate signal G4 from the control unit 120A. The power system 10 is connected to a connection point between the switching element 31a and the switching element 31b and to a connection point between the switching element 31c and the switching element 31d, via a relay circuit not shown.

Fig. 2C shows a waveform of the gate signal G3 input to the switching elements 31a and 31d from the control unit 120A. Fig. 2D shows a waveform of the gate signal G4 input to the switching elements 31b and 31c from the control unit 120A. Fig. 2E shows respective waveforms of the input voltage Vi and the grid voltage Vs. Fig. 2G shows a waveform of an output current Io. Fig. 2H shows a waveform of an input/output ground voltage. Specifically, a ground voltage Vp of the positive-side line Lp between the direct current power source 1 and the buck-boost converter 2A, a ground voltage Vn of the negative-side line Ln between the direct current power source 1 and the buck-boost converter 2A, a ground voltage Vu of one line on the output side, and a ground voltage Vv of the other line on the output side are shown.

In synchronization with the polarity (positive or negative) of the grid voltage Vs, the switching elements 31a to 31d perform switching at a commercial frequency so as to convert the intermediate voltage Vd of a half-sine wave shape corresponding to the commercial frequency obtained from the buck-boost converter 2A, into sine wave alternating current power synchronized with the power system 10.

As explained above, according to the first embodiment, the buck-boost converter 2A includes the positive-side circuit 210A and the negative-side circuit 220A having circuit configurations symmetric to each other. Due to the presence of the positive-side circuit 210A and the negative-side circuit 220A having circuit configurations symmetric to each other, as shown in Fig. 2H, the variance of the respective ground voltages Vp and Vn of the positive-side line Lp and the negative-side line Ln between the direct current power source 1 and the buck-boost converter 2A are canceled out between the positive and negative polarities, resulting in the ground voltages Vp and Vn being kept constant. This inhibits a leakage current passing via the earth capacity Cpv.

Moreover, in the first embodiment, when the positive-side circuit 210A and the negative-side circuit 220A are configured by using circuit elements having the same properties, the balance of the circuit properties in the respective positive-side circuit 210A and the negative-side circuit 220A can be made equal, resulting in a further stability of the ground voltages Vp and Vn.

Further, in the first embodiment, in addition to the arrangement that the positive-side circuit 210A and the negative-side circuit 220A have the circuit configurations symmetric to each other, the respective switching elements 21a and 21b of the positive-side circuit 210A and the negative-side circuit 220A are synchronized and operated, the respective operations of the positive-side circuit 210A and the negative-side circuit 220A can be made equal, resulting in a further stability of the ground voltages Vp and Vn.

### [Second Embodiment]

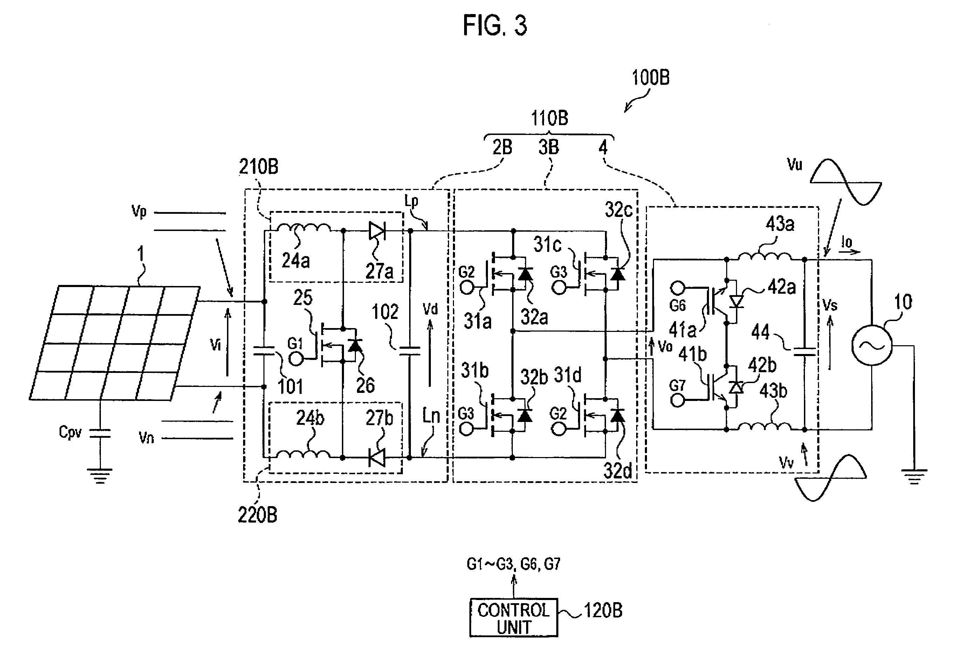

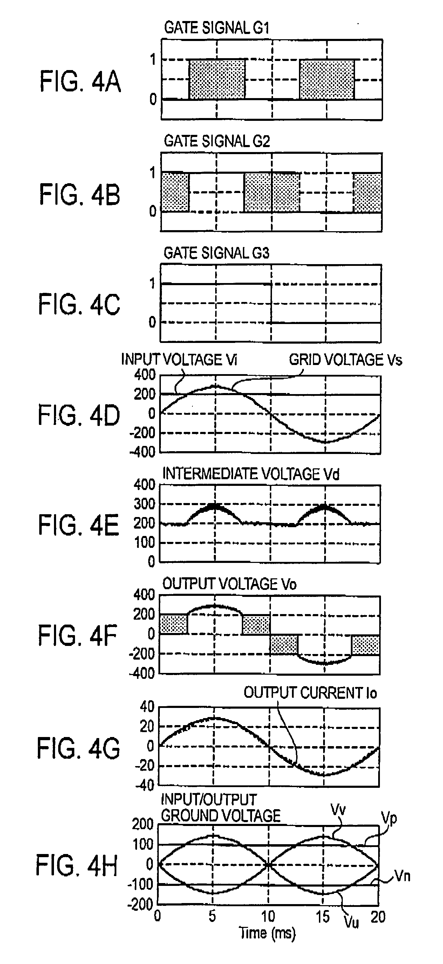

Subsequently, with reference to Fig. 3 and Figs. 4A to 4H, a second embodiment of the present invention will be explained. In the second embodiment, points different from those in the first embodiment will be primarily explained.

Fig. 3 is a diagram showing a configuration of the grid interconnection device including a grid interconnection inverter 100B according to the second embodiment. Figs. 4A to 4H are waveform charts for explaining an operation of the grid interconnection inverter 100B.

The grid interconnection inverter 100B includes: a main circuit 110B; and a control unit 120B controlling the main circuit 110B. The main circuit 110B includes: a boost converter 2B that raises the input voltage Vi from the direct current power source 1 and outputs the intermediate voltage Vd; and a full bridge inverter 3B that converts the intermediate voltage Vd into alternating current power in a sine waveform shape. In the second embodiment, the boost converter 2B configures a voltage conversion circuit. In the second embodiment, a full bridge inverter 3B configures a waveform conversion circuit.

The boost converter 2B according to the second embodiment shapes one portion of the sine waveform corresponding to the alternating current power (grid voltage Vs). Herein, the intermediate voltage Vd output from the boost converter 2B is in a partial convex waveform (see Fig. 4E). The full bridge inverter 3B shapes the sine waveform of the remaining portion, and outputs the alternating current power in a sine waveform shape.

The boost converter 2B includes: an input-stage capacitor 101; a positive-side circuit 210B; a negative-side circuit 220B; a switching element 25; a diode 26; and an interstage capacitor 102. The second embodiment illustrates a power MOSFET as the switching element 25; however, IGBT, etc., may also be illustrated. The switching element 25 performs high-frequency switching in response to the gate signal G1 from the control unit 120B.

The positive-side circuit 210B is arranged on the positive-side line Lp. The negative-side circuit 220B is arranged on the negative-side line Ln. One end of the positive-side line Lp is connected to a positive polarity side of the direct current power source 1, and the other end thereof is connected to one input side (input on the positive side) of the full bridge inverter 3B. One end of the negative-side line Ln is connected to a negative polarity side of the direct current power source 1, and the other end thereof is connected to the other input side (input on the negative side) of the full bridge inverter 3B.

The positive-side circuit 210B and the negative-side circuit 220B have circuit configurations symmetric to each other. Specifically, the positive-side circuit 210B is so configured that on the positive-side line Lp, a plurality of circuit elements different in type are connected in series. The negative-side circuit 220B is so configured that on the negative-side line Ln, a plurality of circuit elements different in type are connected in series. A positive-side circuit element connected at an n-th position as counted from the direct current power source 1 side and a negative-side circuit element connected at an n-th position as counted from the direct current power source 1 side (n: integer of 1 or more) are of the same type. It is noted that the symmetric circuit configuration means symmetry on a circuit diagram, and thus, positions at which the positive-side circuit 210B and the negative-side circuit 220B are actually disposed on the substrate need not be symmetric.

The positive-side circuit 210B includes: a reactor 24a (first reactor); and a diode 27a (first diode) connected downstream of the reactor 24a. The negative-side circuit 220B includes: a reactor 24b (second reactor); and a diode 27b (second diode) connected downstream of the reactor 24b.

The positive-side circuit 210B and the negative-side circuit 220B are configured by using circuit elements having the same property The reactor 24a and the reactor 24b connected at the first position as counted from the direct current power source 1 side are equal in circuit property (inductance, etc.). The diode 27a and diode 27b connected at the second position as counted from the direct current power source 1 side are equal in circuit property (ON voltage, switching speed, etc.). In order to reduce in size, the reactors 24a and 24b may be configured by a method in which a core is shared and windings respectively corresponding to the reactors 24a and 24b are wound around the common core.

Fig. 4A shows a waveform of the gate signal G1 input to the switching element 25 from the control unit 120B. It is noted that in Fig. 4A to 4H, a hatched zone means a zone of the high-frequency switching. Fig. 4D shows respective waveforms of the input voltage Vi and the grid voltage Vs.

The boost converter 2B raises voltage in a fixed period around a time point of a peak voltage of the grid voltage Vs and does not raise the voltage in the other periods. Specifically, the converter 2B does not raise the voltage in a period during which the absolute value of the grid voltage Vs is smaller than that of the input voltage Vi.

Fig. 4E shows the waveform of the intermediate voltage Vd. In the zone where the voltage is raised, the intermediate voltage Vd is in a partial convex waveform. The sine waveform in the remaining portion is shaped by the full bridge inverter 3B.

The full bridge inverter 3B has a circuit configuration similar to that of the first embodiment except that IGBT is used as switching elements 31a to 31d. However, in addition to the IGBT, a power MOSFET, etc., may also be used.

Fig. 4B shows a waveform of the gate signal G2 input to the switching elements 31a and 31d from the control unit 120B. Fig. 4C shows a waveform of the gate signal G3 input to the switching elements 31b and 31c from the control unit 120B.

The boost converter 2B and the full bridge inverter 3B alternately perform high-frequency switching, and the boost converter 2B and the full bridge inverter 3B form a sine waveform. Then, the sine waveform is formed by the circuit that performs the high-frequency switching. When the boost converter 2B performs the high-frequency switching (when it forms the sine waveform), the full bridge inverter 3B switches the polarities, where necessary, and when the full bridge inverter 3B performs high-frequency switching (when it forms the sine waveform), the boost converter 2B stops the buck operation (turns off the switching element 25).

Fig. 4F shows a waveform of an output voltage Vo output from the full bridge inverter 3B. A high frequency component corresponding to the high-frequency switching performed by the full bridge inverter 3B is superposed on the output voltage Vo.

Downstream of the full bridge inverter 3B, a filter circuit 4 is connected. The filter circuit 4 includes: a switching element 41a; a diode 42a; a switching element 41b; a diode 42b; a reactor 43a; a reactor 43b; and a capacitor 44. The filter circuit 4 removes the high frequency component included in the output (output voltage Vo) from the full bridge inverter 3B, and outputs the resultant output.

Fig. 4G shows a waveform of the output current Io. Fig. 4H shows a waveform of an input/output ground voltage. Specifically, a ground voltage Vp of the positive-side line Lp between the direct current power source 1 and the boost converter 2B, a ground voltage Vn of the negative-side line Ln between the direct current power source 1 and the boost converter 2B, a ground voltage Vu of one line on the output side, and a ground voltage Vv of the other line on the output side are shown.

As explained above, in the second embodiment, in the circuit configuration in which the boost converter 2B shapes one portion of the sine waveform corresponding to the alternating current power, when the positive-side circuit 210B and the negative-side circuit 220B are to have circuit configurations symmetric to each other, it becomes possible to inhibit the leakage current passing via the earth capacity Cpv, similarly to the first embodiment.

In the second embodiment, when the positive-side circuit 210B and the negative-side circuit 220B are configured by using circuit elements having the same properties, the balance between the positive and negative circuit properties can be made equal, resulting in a further stability of the ground voltages Vp and Vn.

### [Comparative Embodiment]

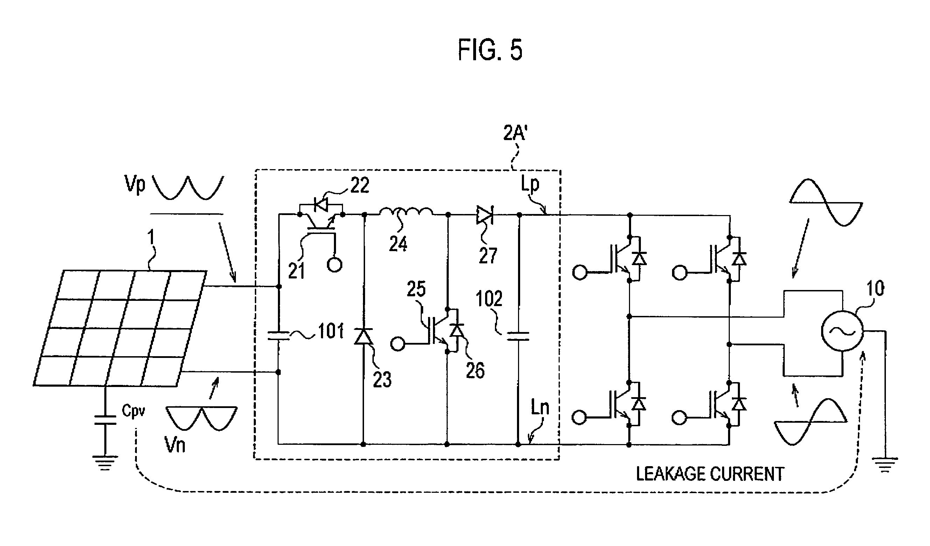

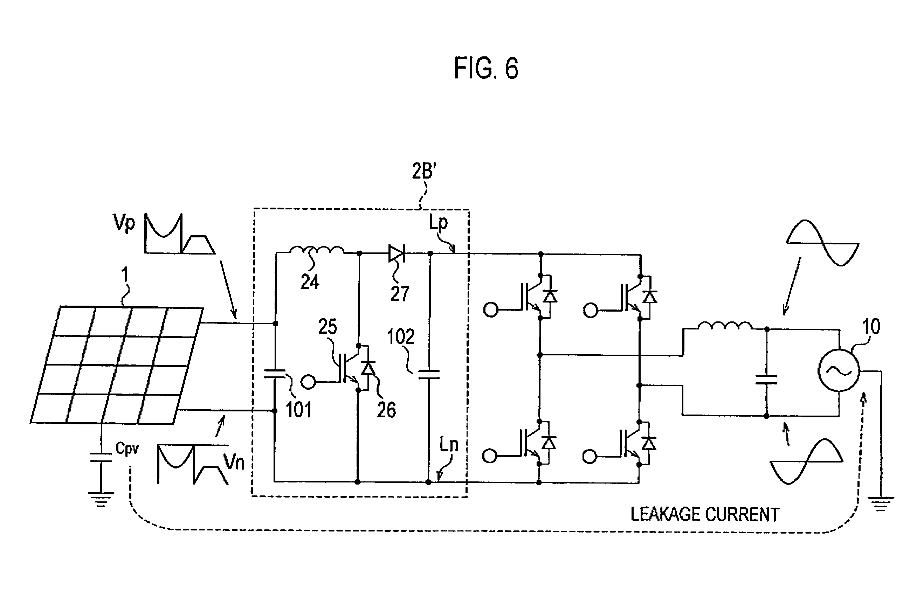

Subsequently, in order to clarify the effects provided in the first embodiment and the second embodiment, with reference to Fig. 5 and Fig. 6, comparative embodiments of the first embodiment and the second embodiment will be explained.

Fig. 5 is a diagram for explaining a comparative embodiment of the first embodiment. In this comparative embodiment, a buck-boost converter 2A' does not include the negative-side circuit 220A explained in the first embodiment. The rest of the configuration is the same as that of the first embodiment. As shown in Fig. 5, in a circuit configuration in which the buck-boost converter 2A' does not include the negative-side circuit 220A, the respective ground voltages Vp and Vn of the positive-side line Lp and the negative-side line Ln between the direct current power source 1 and the buck-boost converter 2A' vary. Thus, the leakage current passes via the earth capacity Cpv In contrary, in the first embodiment, as shown in Fig. 1, the ground voltages Vp and Vn are kept constant, and the leakage current can be inhibited.

Fig. 6 is a diagram for explaining a comparative embodiment of the second embodiment. In this comparative embodiment, a boost converter 2B' does not include the negative-side circuit 220B explained in the second embodiment. The rest of the configuration is the same as that of the second embodiment. As shown in Fig. 6, in a circuit configuration in which the boost converter 2B' does not include the negative-side circuit 220B, the respective ground voltages Vp and Vn of the positive-side line Lp and the negative-side line Ln between the direct current power source 1 and the boost converter 2B' vary. Thus, the leakage current passes via the earth capacity Cpv. In contrary, in the second embodiment, as shown in Fig. 3, the ground voltages Vp and Vn are kept constant, and the leakage current can be inhibited.

### [Other Embodiments]

While the present invention has been described by way of the foregoing embodiments, as described above, it should not be understood that the statements and drawings forming part of this disclosure limits the invention. From this disclosure, a variety of alternate embodiments, examples, and applicable techniques would have been apparent to one skilled in the art.

For example, each of the foregoing embodiments illustrated the solar cell as the direct current power source 1; however, the direct current power source 1 may be any direct current power source having the earth capacity Cpv, and is not limited to the solar cell.

Each of the foregoing embodiments illustrated a case where the buck-boost converter 2A or the boost converter 2B are used as the voltage conversion circuit. However, in a case where the input voltage Vi is higher than the grid voltage Vs, a buck converter may be used as the voltage conversion circuit. The buck converter lowers the input voltage Vi and outputs the intermediate voltage Vd.

Thus, it should be understood that the present invention includes a variety of embodiments, etc., not described herein. Therefore, the present invention should be limited only by the specific matters of claims appropriate from this disclosure.

## Claims

1. A grid interconnection inverter, comprising:
a voltage conversion circuit configured to output an intermediate voltage by raising or lowering an input voltage from a direct current power source; and
a waveform conversion circuit configured to convert the intermediate voltage into a alternating current power in a sine waveform shape; wherein
the voltage conversion circuit shapes at least one portion of a sine waveform corresponding to the alternating current power,
the voltage conversion circuit comprises:
a positive-side circuit arranged on a positive-side line between a positive polarity of the direct current power source and the waveform conversion circuit; and
a negative-side circuit arranged on a negative-side line between a negative polarity of the direct current power source and the waveform conversion circuit, and
the positive-side circuit and the negative-side circuit have circuit configurations symmetric to each other.

2. The grid interconnection inverter according to claim 1, wherein
the positive-side circuit includes a plurality of positive-side circuit elements different in type are connected in series on the positive-side line,
the negative-side circuit includes a plurality of negative-side circuit elements different in type are connected in series on the negative-side line, and
the positive-side circuit element connected at an n-th position as counted from the direct current power source side and the negative-side circuit element connected at an n-th position as counted from the direct current power source side are of the same type.

3. The grid interconnection inverter according to claim 1 or 2, wherein the positive-side circuit comprises:
a first switching element;
a first reactor connected downstream of the first switching element; and
a first diode connected downstream of the first reactor, and
the negative-side circuit comprises:
a second switching element;
a second reactor connected downstream of the second switching element; and
a second diode connected downstream of the second reactor.

4. The grid interconnection inverter according to claim 3, comprising
a control unit configured to control an operation of the voltage conversion circuit, wherein
the control unit operates the first switching element and the second switching element in synchronization with each other.

5. The grid interconnection inverter according to claim 1 or 2, wherein the positive-side circuit comprises:
a first reactor; and
a first diode connected downstream of the first reactor, and
the negative-side circuit comprises:
a second reactor; and
a second diode connected downstream of the second reactor.

6. A grid interconnection device comprising:
a direct current power source; and
the grid interconnection inverter according to any one of claims 1 to 5.
